# FASCICULE DE BREVET EUROPEEN

(11) **EP 2 217 896 B1**
(45) Date de publication et mention de la délivrance du brevet: **25.03.2020**
(21) Numéro de dépôt: 08851352.8
(22) Date de dépôt: 05.11.2008
(51) Int. Cl.: G01J 3/45

(54) **PROCEDE ET DISPOSITIF POUR L'INVERSION INTERFEROMETRIQUE A ECHANTILLONNAGE LIBRE**
VERFAHREN UND EINRICHTUNG ZUR INTERFEROMETRISCHEN INVERSION MIT FREIEM SAMPLING
METHOD AND DEVICE FOR INTERFEROMETRIC INVERSION WITH FREE SAMPLING

(30) Priorité: 19.11.2007 FR 0759135
(43) Date de publication de la demande: 18.08.2010
(73) Titulaire: Centre National d'Etudes Spatiales, 75001 Paris (FR)
(72) Inventeur: ROSAK, Alain, F-31500 Toulouse (FR); PIERANGELO, Clémence, F-31400 Toulouse (FR)
(74) Mandataire: Delorme, Nicolas
(86) Numéro de dépôt international: PCT/EP2008/064975
(87) Numéro de publication internationale: WO 2009/065736

(56) Documents cités:
- WO-A-96/29582
- WO-A-2007/057016
- FR-A- 2 787 186
- US-A- 6 061 582
- SHAFFER R E ET AL: "Experimental design protocol for the pattern recognition analysis of bandpass filtered Fourier transform infrared interferograms", CHEMOMETRICS AND INTELLIGENT LABORATORY SYSTEMS, ELSEVIER SCIENCE PUBLISHERS B.V. AMSTERDAM, NL, vol. 29, no. 1, 1 July 1995 (1995-07-01), pages 89-108, XP004037899, ISSN: 0169-7439, DOI: 10.1016/0169-7439(95)00023-P
- Gary W. Small ET AL: "Detection of atmospheric pollutants by direct analysis of passive Fourier transform infrared interferograms", Analytical Chemistry, vol. 60, no. 3, 1 February 1988 (1988-02-01), pages 264-269, XP055284403, US ISSN: 0003-2700, DOI: 10.1021/ac00154a016
- SMALL G W ET AL: "Rapid signal processing techniques for Fourier transform infrared remote sensing", TRAC TRENDS IN ANALYTICAL CHEMISTRY, ELSEVIER, AMSTERDAM, NL, vol. 10, no. 5, 1 May 1991 (1991-05-01), pages 149-155, XP026580346, ISSN: 0165-9936, DOI: 10.1016/0165-9936(91)85117-A [retrieved on 1991-05-01]
- SMALL G W ET AL: "Application of digital filtering and pattern recognition techniques to interferogram-based fourier transform infrared qualitative analysis", CHEMOMETRICS AND INTELLIGENT LABORATORY SYSTEMS, ELSEVIER SCIENCE PUBLISHERS B.V. AMSTERDAM, NL, vol. 15, no. 2-3, 1 August 1992 (1992-08-01), pages 203-217, XP026502576, ISSN: 0169-7439, DOI: 10.1016/0169-7439(92)85010-Z [retrieved on 1992-08-01]
- KORENBERG M J ET AL: "Raman spectral estimation via fast orthogonal search", ANALYST, LONDON, GB, vol. 122, 1 September 1997 (1997-09-01), pages 879-882, XP002092858, DOI: 10.1039/A700902J

## Description

Le domaine de l'invention est celui de l'interférométrie pour la caractérisation d'une source de rayonnement et/ou d'un milieu traversé par le rayonnement entre la source et un interféromètre.

L'invention concerne plus précisément un procédé d'inversion interférométrique pour la caractérisation d'une source de rayonnement et/ou d'un milieu traversé par le rayonnement entre la source et un interféromètre, mettant en œuvre une inversion interférométrique en exploitant directement l'information contenue dans l'interférogramme élaborée par l'interféromètre.

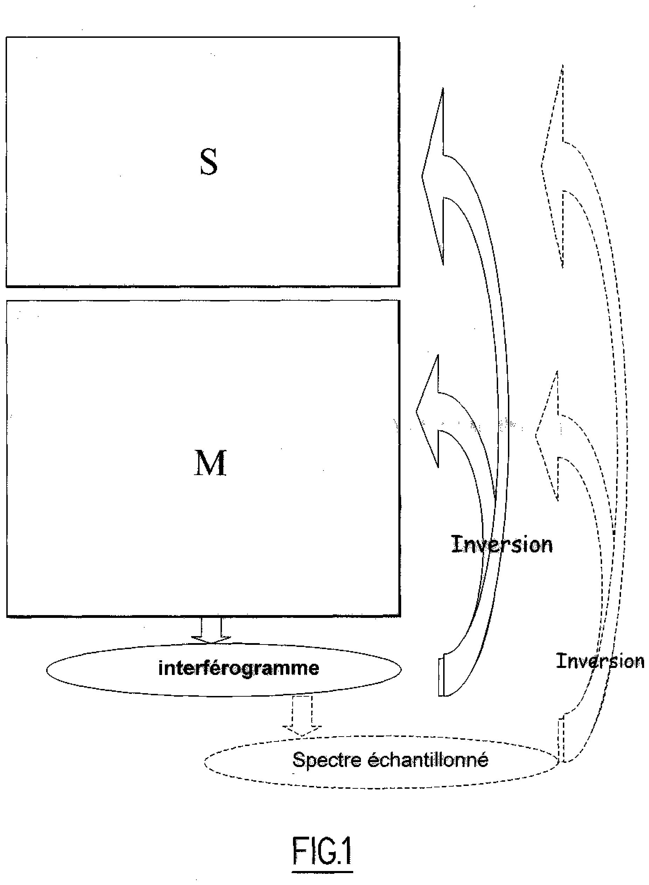

On a représenté sur la figure 1, une source de rayonnement S et un milieu M traversé par le rayonnement issu de la source S.

La source S peut être une source naturelle (par exemple une surface terrestre, le soleil, etc.) ou une source artificielle (par exemple une lampe, un laser, etc.), dont les propriétés sont par exemple la température, l'émissivité/réflectance (liées à la composition chimique, minéralogique, aux taux d'humidité, etc.).

Le milieu M peut être l'atmosphère terrestre ou planétaire, une cellule à gaz ou à liquide, une préparation contenant une molécule d'intérêt chimique ou biologique, etc., dont les propriétés sont par exemple la température, la composition chimique et la concentration des différents éléments, la présence de particules solides ou liquides dans un gaz, etc.

On cherche d'une manière générale à caractériser la source S et/ou le milieu M en retrouvant une ou plusieurs propriétés de la source S et/ou du milieu M à partir d'un interférogramme élaboré par un interféromètre recueillant le rayonnement émis par la source S, après traversée du milieu M. Ces propriétés retrouvées peuvent être qualitatives (présence d'une molécule donnée) ou quantitatives (mesure de la concentration d'un gaz, ou d'un profil de température atmosphérique).

Une technique connue consiste à amener le rayonnement issu de la source S et ayant traversé le milieu M en entrée d'un interféromètre (non représenté) apte à élaborer un interférogramme du rayonnement en créant un nombre fini de différences de marche optique entre deux rayons ayant suivi le même chemin entre la source et l'interféromètre.

L'interférogramme représente ainsi la transformée de Fourier optique du spectre de luminance en entrée de l'interféromètre.

La technique classique d'utilisation d'un spectromètre à transformée de Fourier passe par la reconstruction d'un spectre échantillonné à partir de l'interférogramme pour inverser ensuite les propriétés intéressantes permettant de caractériser la source de rayonnement et/ou le milieu traversé par le rayonnement.

La reconstruction du spectre nécessite de calculer une transformée de Fourier inverse. Le passage de l'interférogramme au spectre nécessite alors un échantillonnage de l'interférogramme relativement régulier afin que la condition de Shannon ou Nyquist soit réalisée. Cela signifie que la distance maximale entre deux échantillons ne doit pas dépasser 1/(2Δσ), avec Δσ la largeur de la bande spectrale observée, d'où un nombre de points minimal dans l'interférogramme de 2ΔσD pour une différence de marche maximale de D. Ce critère d'échantillonnage de l'interférogramme est une contrainte lourde au niveau de l'instrument, notamment pour la réalisation d'un spectromètre à transformée de Fourier classique. En effet, pour atteindre une haute résolution spectrale (par exemple pour détecter une raie fine dans le spectre), une grande valeur de D est requise et donc l'interférogramme doit contenir un grand nombre d'échantillons.

Des techniques existent qui permettent de reconstruire un spectre à partir d'un interférogramme irrégulièrement échantillonné. Ces techniques présentent cependant les limitations suivantes :
- elles peuvent impliquer des contraintes sur l'échantillonnage de l'interférogramme, qui, bien qu'irrégulier, n'est alors pas totalement libre ;
- elles peuvent ne permettre de reconstruire qu'une partie du spectre (quelques raies en émission, généralement) et ne sont alors pas applicables à des spectres en absorption.

La technique classique mettant en œuvre une reconstruction du spectre à partir de l'interférogramme, et l'inversion du spectre pour caractériser la source S et/ou le milieu M, est illustrée par les éléments en pointillés sur la figure 1.

L'invention s'inscrit dans le cadre de techniques mettant quant à elles en œuvre une inversion interférométrique exploitant directement l'information contenue dans l'interférogramme, cela sans reconstruction de spectre. Ces techniques permettent de « raccourcir » la boucle de caractérisation en supprimant les étapes en pointillé sur la figure 1.

Des exemples de ces techniques sont fournis par les documents de brevet WO9629582, US6061582, WO2007057016, FR2787186 ainsi que dans les articles "Experimental design protocol for the pattern récognition analysis of bandpass filtered Fourier transform infrared interferograms" de Shaffer et al., Chemometrics and intelligent laboratory systems, 1995; "Détection of atmospheric pollutants by direct analysis of passive Fourier transform infrared interferograms" de G. Small, Anal. Chem., 1988; "Rapid signal processing techniques for Fourier transform infrared remote sensing" de Small et al., trends in analytical chemistry, vol. 10, no. 5, 1991; "Application of digital filtering and pattern récognition techniques to interferogram-based Fourier transform infrared qualitative analysis" de Small et al., Chemometrics and Intelligent Laboratory Systems, 1992; et "Raman spectral estimation via fast orthogonal search" de Korenberg et al., 1997.

Les mêmes algorithmes d'inversion que ceux utilisés pour passer du spectre aux propriétés du milieu traversé et/ou de la source, peuvent être utilisés pour réaliser une inversion interférométrique exploitant directement l'information contenue dans l'interférogramme. Par exemple, des algorithmes comme l'estimation optimale, ou une reconnaissance de proximité conviennent. Il a à cet égard été montré que l'inversion sur un spectre donné ou sur un interférogramme échantillonné de manière à obtenir le spectre donné conduit aux mêmes performances finales en termes de nombre d'informations retrouvées et de leurs précisions associées.

On comprend ainsi que dans le cadre de l'invention, on cherche à exploiter directement l'information contenue dans un interférogramme pour connaître les caractéristiques de la source de rayonnement et/ou du milieu traversé par le rayonnement entre la source et l'interféromètre, et ce sans reconstruction de spectre. Cela permet d'obtenir des caractéristiques telles que la composition chimique, la concentration d'une espèce moléculaire donnée, la température, l'émissivité etc. de la source et/ou du milieu traversé, sans effectuer la transformée de Fourier de l'interférogramme (i.e. sans acquérir de spectre) et donc sans contrainte d'échantillonnage de l'interférogramme.

L'exploitation directe de l'interférogramme a par exemple déjà été proposée :
- pour le sondage atmosphérique, par exemple dans :
   ∘ Kyle, "Temperature soundings with partially scanned interferograms", 1977
   ∘ Spankuch et al., "Investigations on temperature soundings using partial interferograms", 1987
- ou encore pour l'identification de composés en chimie, par exemple dans :
   ∘ De Haseth et al, « Interferogram-based infrared search system », 1981

Toutefois, les travaux présentés dans ces articles exploitent tous un interférogramme, éventuellement partiel, constitué d'un seul segment échantillonné régulièrement. Ces travaux ne permettent donc pas de lever les contraintes dans la régularité de l'échantillonnage de l'interférogramme.

Partant de ce constat, l'invention a pour objectif de proposer une technique qui permette de s'affranchir des contraintes d'échantillonnage de manière notamment à autoriser une inversion à partir d'un interférogramme irrégulièrement échantillonné, ou sous-échantillonné, qui ne respecte pas la condition de Shannon ou Nyquist.

A cet effet, l'invention propose un procédé d'inversion interférométrique pour la mesure d'une variable caractéristique d'une source de rayonnement et/ou d'un milieu traversé par le rayonnement entre la source et un interféromètre, tel que défini par les revendications 1 ou 2.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels, outre la figure 1 déjà discutée :
- la figure 2 représente une simulation de l'observation du spectre de la luminance atmosphérique au sommet de l'atmosphère dans laquelle on observe une partie du peigne de raies du monoxyde de carbone ;
- la figure 3 représente la transformée de Fourier du spectre de la figure 2, et correspond au signal de la figure 2 dans le domaine de l'interférogramme ;
- la figure 4 représente le Jacobien du monoxyde de carbone dans l'interférogramme de la figure 3 ;
- la figure 5 illustre le contenu en information relative au profil de monoxyde de carbone en fonction de la différence de marche.

L'invention trouve par exemple application dans le domaine spatial. Il s'agit par exemple de réaliser une télédétection, telle qu'un sondage atmosphérique et l'inversion des profils de gaz absorbants, comme le CO, le CO2, etc. (gaz dont la régularité du peigne de raie se traduit par une forte localisation de l'information dans l'interférogramme, donc un optimum très avantageux par rapport à un échantillonnage régulier de l'interférogramme, nécessaire dans la spectrométrie classique).

L'invention trouve également application hors du domaine spatial. Il s'agit par exemple de la spectroscopie infrarouge appliquée à la chimie ou à la biologie (par exemple, dans la recherche comme dans l'industrie, pour la mesure de la concentration d'une molécule cible dans un gaz ou un liquide par un interféromètre). D'une manière générale, toute mesure faite par spectroscopie, notamment infrarouge, peut être réalisée par inversion interférométrique à échantillonnage libre/optimal conformément à la présente invention, le gain apporté étant, comme cela sera détaillé plus en détail par la suite, d'autant plus grand que l'information utile est concentrée dans l'interférogramme.

On relèvera que l'invention, lorsqu'appliquée à un interféromètre statique, peut aussi permettre d'obtenir une bonne résolution temporelle, nécessaire pour caractériser des phénomènes transitoires.

D'une manière générale, et selon un premier mode de réalisation, le procédé selon l'invention met en œuvre une inversion interférométrique en exploitant directement l'information contenue dans l'interférogramme, sans reconstruction d'un spectre du rayonnement échantillonné à partir de l'interférogramme. Il s'agit ainsi d'exploiter directement l'information contenue dans l'interférogramme pour connaître les caractéristiques de la source de rayonnement et/ou du milieu traversé par le rayonnement entre la source et l'interféromètre, et ce sans reconstruction de spectre. Cela permet d'obtenir des caractéristiques telles que la composition chimique, la concentration d'une espèce moléculaire donnée, la température, l'émissivité etc. de la source et/ou du milieu traversé, sans effectuer la transformée de Fourier de l'interférogramme (i.e. sans acquérir de spectre) et donc sans contrainte d'échantillonnage de l'interférogramme.

Plus précisément, il est proposé dans le cadre de l'invention d'échantillonner librement l'interférogramme en utilisant uniquement des différences de marche optique sélectionnées sans contrainte d'échantillonnage, dont la contribution à l'inversion d'une variable caractéristique de la source et/ou du milieu est déterminée comme étant influente.

En d'autres termes, l'invention propose d'échantillonner librement l'interférogramme, en sélectionnant uniquement les différences de marche optiques contenant l'information recherchée et en évitant l'introduction de signaux parasites qui seraient concentrés sur d'autres différences de marche. On travaille de la sorte sur un échantillonnage optimal, ce qui permet de minimiser le nombre d'échantillons mesurés, tout en maximisant les performances de l'inversion des propriétés visées.

Le procédé selon ce mode de réalisation de l'invention s'avère ainsi avantageux notamment en ce qu'il permet :
- avec moins d'échantillons d'avoir une aussi bonne performance finale,
- ou avec autant d'échantillons d'avoir une meilleure performance finale (précision de la mesure d'une ou plusieurs caractéristiques du milieu observé),
- ou de gagner en partie sur les deux niveaux à la fois en diminuant le nombre d'échantillons et en augmentant les performances finales de l'inversion.

La diminution du nombre d'échantillons permet d'avoir un spectromètre plus simple et plus compact dans le cas d'un spectromètre à échelettes statique, ou avec un meilleur rapport signal-à-bruit, par exemple grâce à une surface d'intégration plus grande. Dans le cas d'un spectromètre de Michelson, le temps d'acquisition d'un interférogramme libre peut être réduit (mesure plus rapide) lorsque le premier échantillon n'est pas à différence de marche nulle.

La diminution du nombre d'échantillons permet également de diminuer le nombre de données à traiter ou à transmettre (un facteur limitant dans le cas d'une mesure spatiale par exemple).

Enfin, la sélection des différences de marche peut permettre de s'affranchir de signaux parasites qui seraient mélangés avec le signal recherché dans le spectre (par exemple des composantes spectrales basse fréquence).

On présente dans ce qui suit un exemple de l'intérêt d'un échantillonnage libre et optimal de l'interférogramme en vue d'une inversion interférométrique pour la caractérisation conforme à l'invention d'une source de rayonnement et/ou d'un milieu traversé par le rayonnement.

En spectroscopie infrarouge, on observe souvent des peignes de raies d'absorption ou d'émission caractéristiques de certaines molécules. Or, les positions de ces raies sont dictées par les règles de transitions énergétiques dans la molécule faisant intervenir des nombres quantiques. Ces raies présentent donc souvent un motif périodique très marqué.

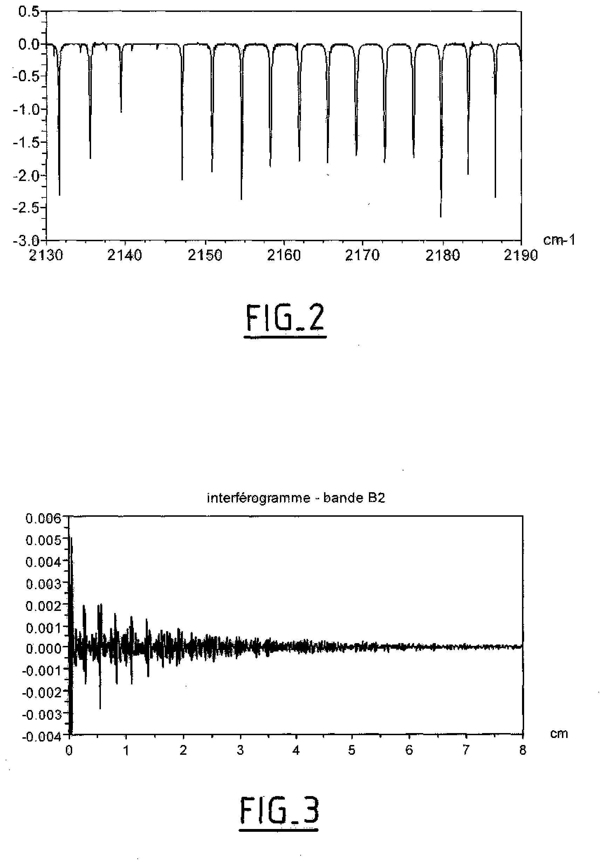

Ceci est par exemple illustré par la figure 2 qui représente une simulation de l'observation du spectre de la luminance atmosphérique au sommet de l'atmosphère dans laquelle on observe une partie du peigne de raies du monoxyde de carbone (CO).

Comme l'illustre la figure 3 représentant la transformée de Fourier du spectre de la figure 2, cette périodicité se traduit également dans le domaine de l'interférogramme (transformée de Fourier du spectre) par un signal présentant des composantes périodiques.

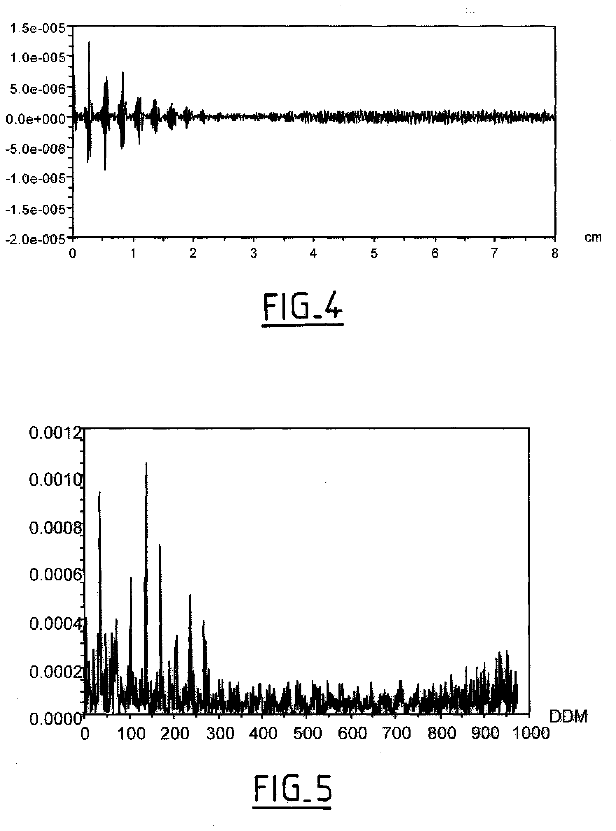

On observe ainsi sur la figure 3 des oscillations marquées autour de la ligne de base (dénommées « bouffées » par la suite) régulièrement espacées. Ces bouffées sont causée par la présence des raies de CO, comme cela est attesté par le calcul des Jacobiens (dérivées partielles de l'interférogramme par rapport à la quantité de CO) illustré sur la figure 4.

Si on cherche à inverser un profil vertical de la concentration du monoxyde de carbone (gaz polluant) dans l'atmosphère, on souhaite maximiser le nombre d'informations indépendantes selon la verticale que l'on peut atteindre. On voit sur la figure 5 que la contribution des différents échantillons de l'interférogramme (les « différences de marche » DDM) à l'inversion du profil de CO (variable caractéristique du milieu traversé) est fortement variable.

On peut donc envisager d'acquérir uniquement les différences de marche dans l'interférogramme qui contiennent l'information utile.

On relèvera qu'une telle démarche n'est pas applicable dans le spectre. En effet, si certains échantillons du spectre contiennent certes peu d'information utile (par exemple, entre deux raies du peigne de CO), la spectroscopie par transformée de Fourier ne permet toutefois pas d'acquérir seulement quelques échantillons du spectre car celui-ci est reconstruit en bloc par transformée de Fourier inverse de l'interférogramme.

Dans l'exemple ici considéré, on comprend donc qu'en optimisant les positions des DDM de l'interférogramme, on peut obtenir une augmentation du contenu en information qui n'aurait pu être atteinte pour un échantillonnage régulier qu'en améliorant le rapport signal-à-bruit de l'instrument (dans l'exemple, un facteur légèrement supérieur à 2). A contrario, si on souhaite conserver la même performance, alors, on a calculé pour cet exemple que 200 échantillons bien placés sont aussi efficaces que presque 1000 échantillons régulièrement placés.

Selon une variante de réalisation de l'invention, on reconstruit un spectre tout en utilisant un échantillonnage libre optimisé conformément à ce qui a été présenté précédemment (et donc susceptible de comporter de grands « trous » de mesure) et on procède à l'inversion de ce spectre. A cet effet, l'interférogramme acquis par sélection des différences de marche qui contiennent l'information utile est complété en utilisant des valeurs théoriques (modélisées pour certaines valeurs a priori des variables, ou même arbitraires) afin de se ramener à un échantillonnage suffisamment fin (par exemple régulièrement échantillonné) pour permettre la reconstruction d'un spectre par transformée de Fourier de l'interférogramme échantillonné ainsi complété.

Dans le cadre de cette variante de réalisation, on conserve l'avantage de simplification instrumentale ou d'amélioration du rapport signal-à-bruit, mais on perd alors l'avantage de la réduction du nombre de données. Cependant, l'obtention d'un spectre peut être utile si l'on dispose d'une chaîne de traitement qui prend en entrée des spectres et que l'on ne veut pas la modifier pour y injecter des interférogrammes.

L'inversion sur le spectre ainsi obtenue peut dépendre des a priori utilisés dans le calcul des différences de marche non acquises, mais cette dépendance peut être réduite voire supprimée, par exemple si l'on affecte un bruit infini aux différences de marche simulées dans le processus d'inversion des variables caractéristiques de la source et/ou du milieu que l'on veut inverser.

Revenant à la description générale de l'invention, l'optimisation de l'échantillonnage de l'interférogramme consiste à sélectionner, sans contraintes de régularité d'échantillonnage, des différences de marche optique dont la contribution à l'inversion d'une variable recherchée pour caractériser la source et/ou du milieu est déterminée comme étant influente.

Cette sélection peut être réalisée de manière empirique, par exemple à partir de la visualisation des positions des bouffées dans un interférogramme simulé par exemple.

Cette sélection peut également être réalisée de manière algorithmique selon le principe exposé ci-après :
- a : On détermine une grandeur G qui caractérise l'amélioration de l'inversion. Par amélioration de l'inversion, on entend en particulier une optimisation dans la mesure de la variable caractéristique de propriétés (qualitatives ou quantitatives) de la source et/ou du milieu traversé. Initialement, aucune DDM n'est sélectionnée et G=0 ;
- b : On calcule pour chaque DDM i l'augmentation de la grandeur G quand on ajoute la DDM i à l'ensemble des DDM précédemment sélectionnées ;
- c : On ajoute la DDM i qui maximise la grandeur G à l'ensemble des DDM sélectionnées, et on reprend à l'étape b.

L'algorithme s'achève quand le compromis entre le nombre de DDM sélectionnées et la performance de l'inversion atteinte est considéré comme étant optimal. On sélectionne ainsi les différences de marche qui contribuent principalement à l'optimisation de la grandeur G, en éliminant celles qui n'influent que très peu sur l'optimisation de cette grandeur. Cet algorithme permet de sélectionner les DDM sensibles au signal recherché (le CO dans l'exemple présenté précédemment) mais également d'éliminer les DDM sensibles à des signaux atmosphériques parasites (par exemple la vapeur d'eau, ou la température de surface).

On détaille ci-après différents modes de réalisation possible du procédé selon le premier aspect de l'invention.

### Etape A : Obtention de la répartition du contenu en information dans un interférogramme

L'interférogramme est un interférogramme « quasi-continu » échantillonné aussi finement que possible afin de balayer « toutes » les positions possibles, ou tout du moins toutes les positions que l'on envisage d'acquérir (on peut volontairement ignorer certaines zones si l'on sait a priori qu'elles sont sans intérêt ou qu'il est impossible de les acquérir, par exemple des DDM trop élevées pour l'encombrement maximal de l'instrument). Cet interférogramme « quasi-continu » peut être théorique (issu de modélisation) ou réel (si l'on dispose d'un autre instrument permettant d'acquérir un tel interférogramme).
❖ Une fois l'application (ou les applications) choisie (par exemple, la mesure du profil atmosphérique de CO, ou d'ozone, de température, ou la reconnaissance d'une molécule ou famille de molécules...), on détermine une grandeur apte à caractériser la performance, ou amélioration, de l'inversion. A titre d'exemples non limitatifs d'une telle grandeur, on peut citer :
   - le nombre d'éléments indépendants selon la verticale dans le cas du sondage atmosphérique, par exemple pour l'obtention du profil de concentration d'un gaz comme le CO (donné par le nombre de DOFS « degrees of Freedom for Signal », comme décrit par exemple dans l'ouvrage Rodgers, C.D., 2000 : "Inverse methods for atmospheric sounding : theory and practice", World Scientific). On va alors chercher à maximiser cette grandeur ;
   - la précision de la variable inversée, par exemple, la précision en pourcentage sur la concentration de CO dans la couche d'air comprise entre 0 et 2 km (si on s'intéresse au CO près de la surface). On va chercher à minimiser cette grandeur ;
   - une composante de l'erreur sur le produit inversé. Il s'agit par exemple de minimiser l'erreur liée à un paramètre du modèle (par exemple la température de l'air) sur le produit (par exemple la concentration de CO intégrée sur toute la colonne d'air) ;
   - la capacité à discriminer deux molécules différentes.
❖ Puis, dans un deuxième temps, on détermine l'information qu'apporterait chaque DDM à l'optimisation de la grandeur « performance de l'inversion » déterminée à l'étape précédente (maximisation ou minimisation selon les cas).

Pour cela on vient :
- modéliser l'influence de la variable recherchée sur l'interférogramme « quasi-continu ». Dans le cas du sondage atmosphérique, cela se fait par un code de transfert radiatif, qui fournit un spectre infiniment résolu et à partir duquel on peut, en appliquant une transformée de Fourier, calculer un interférogramme.

On peut, selon les cas, modéliser :
- l'interférogramme ;
- les jacobiens de l'interférogramme (dérivées partielles du signal de l'interférogramme par rapport à la ou les grandeurs à inverser). Les jacobiens donnent la sensibilité de chaque DDM à la grandeur à inverser. Il est également possible de calculer les jacobiens de l'interférogramme par rapport à des composants « parasites » (par exemple, l'humidité de l'air dans le cas du CO ; autre exemple, un défaut instrumental, comme le gain).

### Etape B : Sélection des DDM

Plusieurs variantes sont possibles.
✔ Comme déjà indiqué, cette sélection peut être réalisée de manière empirique.
   - Dans l'hypothèse où l'on part de l'interférogramme (figure 3), on sélectionne les DDM qui correspondent aux bouffées, si on est certain que leur présence est bien causée par l'espèce ciblée.
   - Dans l'hypothèse où l'on part des jacobiens (figure 4), qui fournissent directement la sensibilité de chaque DDM à l'espèce cible, on sélectionne les DDM dans les bouffées (on est alors certain qu'elles sont bien la signature de l'espèce cherchée et pas d'un autre paramètre).
   - Dans l'hypothèse on l'on part d'un autre indicateur de contenu en information plus élaboré (figure 5), on sélectionne les DDM là où le contenu est le plus important.

   On calcule par exemple (par inversion explicite, ou selon des techniques d'estimation) la grandeur « performance de l'inversion » pour l'interférogramme « quasi-continu » complet et pour l'interférogramme auquel on a retiré une DDM.
   Par différence entre ces deux calculs, on obtient une estimation de l'apport de la DDM retirée à la grandeur « performance de l'inversion ». La figure 5 illustre une telle estimation réalisée en calculant les DOFS d'après les équations données dans l'ouvrage de Rodgers déjà cité ci-dessus, à partir des jacobiens dans l'interférogramme pour le CO et pour des paramètres variables (humidité, température...).
   Ce mode de réalisation présente l'avantage de ce que le « contenu en information » ainsi déterminé tient compte non seulement de la sensibilité au CO (qui est maximisée car elle doit être la plus grande possible) mais aussi de la sensibilité aux autres paramètres (humidité, température, etc.) qui est minimisée (ce qui revient à faire une sorte de filtrage des signaux parasites).
✔ Comme également déjà indiqué précédemment, la sélection des DDM peut également être réalisée de manière algorithmique.
   - La méthode itérative dont un exemple est donné plus haut dans ce document peut être mise en œuvre. Dans le cas présent G est le nombre de DOFS, calculé à partir des jacobiens dans l'interférogramme du CO et des autres variables.
   - Une autre technique possible consiste à réaliser un regroupement des DDM proches par « grappes», soit par étude des corrélations entre DDM, soit encore par recherche de similarité entre des jacobiens verticaux (par exemple dans le cas de l'inversion d'un profil). On peut alors choisir un seul représentant de chaque grappe, ce qui limite le nombre de DDM à acquérir.
      Dans le cas d'un regroupement basé sur la corrélation, l'optimisation n'est pas faite par rapport à la variable à inverser uniquement, mais par rapport à l'ensemble des paramètres variables ayant permis d'obtenir la « base » sur laquelle est calculée la corrélation.
   - Encore une autre technique possible consiste à utiliser des analyses du type « ACP » (Analyse en Composante Principale) pour identifier la ou les composantes portant le signal intéressant (classe dont la variance est maximale par rapport à la grandeur à inverser, et minimale par rapport aux autres variables) et sélectionner ensuite les DDM qui interviennent principalement dans ces composantes.
   - Encore une autre technique consiste à procéder à partir de l'application du modèle d'inversion à plusieurs interférogrammes simulés échantillonnés différemment. On retient alors, parmi les échantillonnages testés, l'échantillonnage qui donne les inversions les plus satisfaisantes, en utilisant comme élément de comparaison la grandeur « performance de l'inversion » choisie précédemment.

L'invention n'est bien entendu pas limitée à un procédé de caractérisation d'une source et/ou d'un milieu, mais s'étend également à un interféromètre destiné à être utilisé dans un tel procédé, l'interféromètre comprenant des moyens de réception d'un rayonnement ayant traversé un milieu depuis une source d'émission, et étant caractérisé en ce qu'il comporte des moyens de création d'un nombre fini de différences de marche optique entre deux rayons ayant suivi le même chemin entre la source et ladite entrée conformés pour élaborer un interférogramme à partir des différences de marche dont la contribution lors de l'inversion d'une variable caractéristique de la source et/ou du milieu est déterminée comme étant influente.

Ce qui suit concerne plus précisément l'implémentation pratique du procédé selon le premier aspect de l'invention, et s'attache à décrire différentes forme de réalisation possible d'un interféromètre selon le second aspect de l'invention.

### Interféromètre dynamique

Dans le cas d'un interféromètre dynamique, un détecteur unique acquiert l'information. Les différentes « différences de marche » sont produites en déplaçant un des deux bras de l'interféromètre. Le détecteur unique acquiert alors en fonction du temps le signal interférométrique.

Dans la configuration classique, lorsque le moteur déplace le miroir, on passe de manière continue sur toutes les différences de marche. L'ensemble des différences de marche est ainsi acquis de manière continue.

On n'observe donc pas de gain instrumental à en sélectionner certaines plus intéressantes. En revanche, on observe un gain à transmettre uniquement les données nécessaires, ce qui permet par exemple dans le cas d'une instrumentation embarquée, de réduire le débit de télémesure.

Une variante instrumentale du spectromètre à TF dynamique consiste à remplacer le moteur continu par un moteur pas à pas. Cela est nécessaire par exemple dans le cas des applications faibles flux (afin de pouvoir avoir un temps d'intégration du signal long), ou dans le cas d'applications nécessitant de la modulation en présence de mesures dont le bruit est dominé par des sources parasites. Une telle variante instrumentale à moteur pas à pas peut donc être utilisée pour n'acquérir que les DDMs utiles. Ceci permet alors d'augmenter le temps de mesure, donc le rapport Signal/Bruit, ou de diminuer le temps de mesure pour un rapport Signal/Bruit donné.

Selon une variante du second aspect de l'invention, on prévoit ainsi un interféromètre dynamique doté d'un moteur pas à pas et de moyens de contrôle du moteur adaptés pour déplacer le miroir aux différences de marche sélectionnées pour leur contribution.

### Interféromètre statique à échelettes

Il a été montré dans le document FR 2 787 186 que le spectromètre dynamique peut être simplifié en remplaçant le dispositif de déplacement du miroir par un système d'échelettes. La différence de marche n'est dans ce cas pas créée en déplaçant un des deux miroirs, mais en fragmentant l'un au moins des miroirs en une série de petits miroirs (comme des petites marches).

Chaque petite zone du miroir ainsi fragmenté, c'est-à-dire chaque marche, est positionnée à une certaine différence de marche. L'ensemble des différences de marche est alors acquise simultanément par une matrice de détecteur imageant les miroirs fragmentés (soit les marches). En d'autres termes, on réalise N interféromètres de Michelson en parallèle, chacun étant « gelé » à une différence de marche choisie et imagé simultanément sur une matrice de détecteur.

La limitation instrumentale de ce principe est liée à la capacité technologique de réaliser ces miroirs fragmentés. Une haute résolution spectrale est cependant possible si l'on se limite à un spectre étroit car le nombre de « fragmentation » du miroir est directement proportionnel au nombre d'échantillons que l'on veut dans le spectre (soit le rapport de la largeur spectrale sur la résolution spectrale).

On comprend donc que la présente invention tire pleinement intérêt d'un tel interféromètre statique à échelettes dans la mesure où il permet, en conservant la même sensibilité, de limiter le nombre de marches à réaliser.

Pareillement, on peut conserver un même nombre de marche, et ainsi sonder une plus grande bande spectrale, et donc utiliser plus d'informations spectrales.

On peut enfin augmenter la résolution spectrale, toujours à même nombre de marches, ce qui augmente aussi l'information spectrale.

Selon une variante du second aspect de l'invention, on prévoit ainsi un interféromètre statique à échelettes dont l'un au moins des miroirs présente une pluralité de surfaces réfléchissantes agencées de manière à fournir les différentes de marche sélectionnées pour leur contribution.

A titre d'exemple de réalisation, on utilise, pour générer par exemple 900 DDMs différentes, deux miroirs à échelettes comprenant chacun 30 marches. Les deux miroirs sont à 90° l'un de l'autre et forment un « réseau » de 900 DDM différentes. Pour cela, le premier miroir est constitué de petites marches régulières. Le deuxième miroir est constitué de grandes marches, la hauteur de la grande marche étant la somme des hauteurs des petites marches du miroir aux « petites échelettes ». On obtient ainsi une progression régulière de l'échantillonnage sans redondance d'information.

Les petites marches permettent d'obtenir un maillage plus fin entre deux grandes marches. Il est donc difficile de modifier le pas du petit escalier pour s'adapter à chaque zone de l'interférogramme. En revanche, les grandes marches peuvent être complètement irrégulières de manière à définir une zone d'intérêt autour duquel les petites marches feront un maillage plus fin.

Lorsque le nombre de marche est suffisamment faible (typiquement moins de 100), il est possible d'envisager non pas deux escaliers de verre à 90°, mais un miroir plan plus un miroir à marche (ou tout autre combinaison des deux solutions). L'échantillonnage est alors complètement libre.

### Interféromètre quasi statique

Le pas d'échantillonnage en DDM de l'interféromètre statique à échelettes résulte dans la capacité à maitriser l'assemblage des escaliers de verre (ou de l'ensemble de verre suivant sa forme). Cette capacité peut être de l'ordre de 1 à 2 µm, ce qui pose une difficulté supplémentaire dans le domaine des courtes longueurs d'onde. En effet, la position optimum déterminée par les algorithmes précédents doit être réalisée à une fraction de longueur d'onde. Dans le domaine visible-proche infrarouge, la réalisation pratique peut alors s'avérer difficile à réaliser.

Selon encore une autre variante de réalisation on adjoint à l'interféromètre statique à échelettes une modulatrice adaptée pour faire varier faiblement la DDM typiquement de l'ordre d'une fraction de longueur d'onde, voir de quelques longueurs d'onde, de manière simultanée pour toutes les échelettes.

On peut par exemple faire varier le tilt de la compensatrice de verre du Michelson, ou encore également monter l'un des miroirs à échelettes sur un mécanisme piézoélectrique. Le déplacement nécessaire est par exemple d'un quart de longueur d'onde (soit 2.5µm pour une bande spectrale autour de 10µm), ce qui est réalisable par un mécanisme simple (type piézoélectrique), contrairement à la course de plusieurs centimètres nécessaires dans le cas du spectromètre à TF dynamique. L'instrument ainsi réalisé est qualifié d' « interféromètre quasi statique ».

Avec un déplacement d'une fraction de longueur d'onde entre deux acquisitions, lorsque l'erreur de réalisation est telle que l'on se trouve dans un état d'interférence neutre (donc sans information), l'acquisition suivante, déplacée d'une ou quelques fractions de longueur d'onde, se trouve dans un état d'interférence différent et non neutre. On s'affranchit ainsi de la difficulté de réalisation des marches et on échantillonne plus finement autour des zones d'intérêt déterminées.

### Interféromètre dynamique à échelette

On prévoit selon une autre variante de réalisation possible de panacher les solutions exposées ci-dessus, en ajoutant des échelettes à un interféromètre dynamique ce qui permet notamment d'en augmenter la résolution spectrale.

Par exemple, pour un spectromètre classique de course 2cm, on peut fragmenter le miroir en 4 marches, selon une progression des hauteurs de marches de 2cm. On peut ainsi obtenir 4 interférogrammes, le premier de 0 à 2cm, le deuxième de 2 à 4 cm, etc et atteindre une résolution de 8cm. On peut aussi avoir 4 interférogrammes non jointifs, en décalant les marches d'une valeur supérieure à la course, dans le cas où l'information manquante est de faible importance.

## Revendications

1. Procédé de mesure d'une variable caractéristique d'une source de rayonnement et/ou d'un milieu traversé par le rayonnement entre la source et un interféromètre, l'interféromètre étant apte à élaborer un interférogramme du rayonnement en créant un nombre fini de différences de marche optique entre deux rayons ayant suivi le même chemin entre la source et l'interféromètre, le procédé comprenant :
- une inversion interférométrique réalisée sur la base de l'interférogramme, de sorte à obtenir une mesure de la variable caractéristique,
le procédé étant **caractérisé en ce qu'**il comprend les étapes consistant à:
- estimer la contribution de chaque différence de marche à l'étape d'inversion interférométrique, en utilisant une modélisation par un code de transfert radiatif;
- réaliser une sélection parmi les différences de marche, sans contraintes de régularité d'échantillonnage, en fonction des résultats de l'étape d'estimation, la réalisation de la sélection comprenant l'utilisation d'une grandeur caractérisant la performance ou l'amélioration de l'inversion interférométrique, et la répétition de manière itérative des étapes suivantes :
a : initialement, aucune différence de marche n'est sélectionnée;
b: on calcule pour chaque différence de marche l'augmentation de la grandeur caractérisant la performance ou l'amélioration de l'inversion interférométrique,
quand on ajoute ladite différence de marche à l'ensemble des différences de marche précédemment sélectionnées, ce calcul faisant intervenir les jacobiens de l'interférogramme, c'est-à-dire les dérivées partielles du signal de l'interférogramme par rapport à la ou les grandeurs à inverser;
c: on ajoute la différence de marche, qui optimise ladite grandeur, à l'ensemble des différences de marche sélectionnées, et on reprend à l'étape b, jusqu'à atteindre un nombre maximum de différences de marche sélectionnées ou jusqu'à ce que ladite grandeur dépasse un seuil prédéterminé;
- élaborer l'interférogramme en utilisant uniquement les différences de marche sélectionnées, et
- mesurer la variable caractéristique de la source de rayonnement et/ou du milieu traversé en fonction des informations contenues dans l'interférogramme élaboré en utilisant uniquement les différences de marche sélectionnées, sans reconstruction d'un spectre du rayonnement échantillonné à partir de l'interférogramme.

2. Procédé de mesure d'une variable caractéristique d'une source de rayonnement et/ou d'un milieu traversé par le rayonnement entre la source et un interféromètre, l'interféromètre étant apte à élaborer un interférogramme du rayonnement en créant un nombre fini de différences de marche optique entre deux rayons ayant suivi le même chemin entre la source et l'interféromètre, le procédé comprenant :
- une inversion interférométrique réalisée sur la base de l'interférogramme, de sorte à obtenir une mesure de la variable caractéristique,
le procédé étant **caractérisé en ce qu'**il comprend les étapes consistant à:
- estimer la contribution de chaque différence de marche à l'étape d'inversion interférométrique, en utilisant une modélisation par un code de transfert radiatif;
- réaliser une sélection parmi les différences de marche, sans contraintes de régularité d'échantillonnage, en fonction des résultats de l'étape d'estimation, la réalisation de la sélection comprenant l'utilisation d'une grandeur caractérisant la performance ou l'amélioration de l'inversion interférométrique, et la répétition de manière itérative des étapes suivantes :
a : initialement, aucune différence de marche n'est sélectionnée;
b: on calcule pour chaque différence de marche l'augmentation de la grandeur caractérisant la performance ou l'amélioration de l'inversion interférométrique,
quand on ajoute ladite différence de marche à l'ensemble des différences de marche précédemment sélectionnées, ce calcul faisant intervenir les jacobiens de l'interférogramme, c'est-à-dire les dérivées partielles du signal de l'interférogramme par rapport à la ou les grandeurs à inverser;
c: on ajoute la différence de marche, qui optimise ladite grandeur, à l'ensemble des différences de marche sélectionnées, et on reprend à l'étape b, jusqu'à atteindre un nombre maximum de différences de marche sélectionnées ou jusqu'à ce que ladite grandeur dépasse un seuil prédéterminé;
- élaborer un interférogramme en utilisant uniquement les différences de marche sélectionnées,
- compléter avec des valeurs théoriques, l'interférogramme élaboré en utilisant uniquement les différences de marche sélectionnées, lesdites valeurs théoriques étant des valeurs obtenues à partir d'une modélisation,
- reconstruire d'un spectre du rayonnement à partir de l'interférogramme élaboré et complété, et
- mesurer la variable caractéristique de la source de rayonnement et/ou du milieu traversé en utilisant le spectre du rayonnement reconstruit à partir de l'interférogramme.

3. Procédé selon l'une des revendications 1 ou 2, dans lequel l'interférogramme est élaboré au moyen d'un interféromètre comprenant au moins un miroir présentant une pluralité de surfaces réfléchissantes agencées de manière à créer les différences de marche sélectionnées.

4. Procédé selon l'une des revendications 1 ou 2, dans lequel l'interférogramme est élaboré au moyen d'un interféromètre comprenant au moins un miroir et un moteur pas à pas adapté pour déplacer le miroir, et dans lequel l'étape d'élaboration de l'interférogramme est réalisée en contrôlant le moteur pour déplacer le miroir aux différences de marche sélectionnées.

## Patentansprüche

1. Verfahren zur Messung einer charakteristischen Variable einer Strahlungsquelle und/oder eines Mediums, das von der Strahlung zwischen der Quelle und einem Interferometer durchquert wird, wobei das Interferometer ausgelegt ist, um ein Interferogramm der Strahlung zu erstellen, indem eine begrenzte Anzahl von optischen Wegdifferenzen zwischen zwei Strahlen erstellt wird, die den gleichen Weg zwischen der Quelle und dem Interferometer zurückgelegt haben, wobei das Verfahren Folgendes umfasst:
- eine interferometrische Inversion, durchgeführt ausgehend vom Interferogramm, um eine Messung der charakteristischen Variable zu erhalten, wobei das Verfahren **dadurch gekennzeichnet ist, dass** es die Schritte umfasst, die darin bestehen:
- den Beitrag jeder Wegdifferenz zum Schritt der interferometrischen Inversion unter Verwendung einer Modellierung durch einen Strahlen-Übertragungscode zu schätzen;
- eine Auswahl unter den Wegdifferenzen ohne Einschränkungen der Regelmäßigkeit des Samplings, je nach den Ergebnissen des Schritts des Schätzens, durchzuführen, wobei die Durchführung der Auswahl die Verwendung einer Größe, die die Leistung oder die Verbesserung der interferometrischen Inversion kennzeichnet, und die Wiederholung auf iterative Weise der folgenden Schritte umfasst:
a: anfänglich wird keinerlei Wegdifferenz ausgewählt;
b: es wird für jede Wegdifferenz die Erhöhung der Größe berechnet, die die Leistung oder die Verbesserung der interferometrischen Inversion kennzeichnet, wenn die Wegdifferenz der Gesamtheit der zuvor ausgewählten Wegdifferenzen zugefügt wird, wobei diese Berechnung die Jacobi-Werte des Interferogramms einsetzt, das heißt die teilweisen Ableitungen des Signals des Interferogramms mit Bezug auf die Größe(n), die invertiert werden soll(en);
c: es wird die Wegdifferenz, die die Größe optimiert, der Gesamtheit der ausgewählten Wegdifferenzen zugefügt, und in Schritt b wiedederaufgenommen, bis eine maximale Anzahl von ausgewählten Wegdifferenzen erhalten wird, oder bis die Größe einen vorbestimmten Schwellwert übersteigt;
- Erstellen eines Interferogramm unter Verwendung nur der ausgewählten Wegdifferenzen, und
- Messen der charakteristischen Variable der Strahlungsquelle und/oder des Mediums, das je nach den Informationen, enthalten im erstellten Interferogramm, durchquert wird, unter Verwendung nur der ausgewählten Wegdifferenzen, ohne Rekonstruktion eines Spektrums der gesampelten Strahlung ausgehend vom Interferogramm.

2. Verfahren zur Messung einer charakteristischen Variable einer Strahlungsquelle und/oder eines Mediums, das von der Strahlung zwischen der Quelle und einem Interferometer durchquert wird, wobei das Interferometer ausgelegt ist, um ein Interferogramm der Strahlung zu erstellen, indem eine begrenzte Anzahl von optischen Wegdifferenzen zwischen zwei Strahlen erzeugt wird, die den gleichen Weg zwischen der Quelle und dem Interferometer zurückgelegt haben, wobei das Verfahren Folgendes umfasst:
- eine interferometrische Inversion, durchgeführt ausgehend vom Interferogramm, um eine Messung der charakteristischen Variable zu erhalten, wobei das Verfahren **dadurch gekennzeichnet ist, dass** es die Schritte umfasst, die darin bestehen:
- den Beitrag jeder Wegdifferenz zum Schritt der interferometrischen Inversion unter Verwendung einer Modellierung eines Strahlen-Übertragungscodes zu schätzen;
- eine Auswahl unter den Wegdifferenzen ohne Einschränkung der Regelmäßigkeit des Samplings, je nach den Ergebnissen des Schritts des Schätzens durchzuführen, wobei das Durchführen der Auswahl die Verwendung einer Größe, die die Leistung oder die Verbesserung der interferometrischen Inversion kennzeichnet, und die Wiederholung auf iterative Weise der folgenden Schritte umfasst:
a: anfänglich wird keinerlei Wegdifferenz ausgewählt;
b: es wird für jede Wegdifferenz die Erhöhung der Größe berechnet, die die Leistung oder die Verbesserung der interferometrischen Inversion kennzeichnet, wenn die Wegdifferenz der Gesamtheit der zuvor ausgewählten Wegdifferenzen zugefügt wird, wobei diese Berechnung die Jacobi-Werte des Interferogramms einsetzt, das heißt die teilweisen Ableitungen des Signals des Interferogramms mit Bezug auf die zu invertierende Größe;
c: es wird die Wegdifferenz, die die Größe optimiert, der Gesamtheit der ausgewählten Wegdifferenzen zugefügt, und in Schritt b wiederaufgenommen, bis eine maximale Anzahl von ausgewählten Wegdifferenzen erhalten wird, oder bis die Größe einen vorbestimmten Schwellwert übersteigt;
- Erstellen eines Interferogramms unter Verwendung nur der ausgewählten Wegdifferenzen,
- Vervollständigen, mit theoretischen Werten, des Interferogramms unter Verwendung nur der ausgewählten Wegdifferenzen, wobei die theoretischen Werte Werte sind, die ausgehend von einer Modellierung erhalten werden,
- Rekonstruieren eines Spektrums der Strahlung ausgehend vom erstellten und vervollständigten Interferogramm, und
- Messen der charakteristischen Variable der Strahlungsquelle und/oder des durchquerten Mediums unter Verwendung des Spektrums der Strahlung, das ausgehend vom Interferogramm rekonstruiert wurde.

3. Verfahren nach einem der Ansprüche 1 oder 2, wobei das Interferogramm mit Hilfe eines Interferometers erstellt wird, umfassend mindestens einen Spiegel, der eine Vielzahl von reflektierenden Flächen aufweist, die angeordnet sind, um die ausgewählten Wegdifferenzen zu erzeugen.

4. Verfahren nach einem der Ansprüche 1 oder 2, wobei das Interferogramm mit Hilfe eines Interferometers erstellt wird, umfassend mindestens einen Spiegel und einen Motor, der Schritt für Schritt ausgelegt ist, um den Spiegel zu verschieben, und wobei der Schritt des Erstellens des Interferogramms durchgeführt wird, indem der Motor gesteuert wird, um den Spiegel an die ausgewählten Wegdifferenzen zu verschieben.

## Claims

1. A method for measuring a characteristic variable of a radiation source and/or of a medium crossed by the radiation between the source and an interferometer, the interferometer being adapted to plot an interferogram of the radiation by creating a finite number of optical path differences between two rays having followed the same path between the source and the interferometer, the method comprising:
- an interferometric inversion carried out on the basis of the interferogram, so as to obtain a measurement of the characteristic variable,
the method being **characterized in that** it comprises the steps consisting in:
- estimating the contribution of each path difference to the interferometric inversion step, using a modeling by a radiative transfer code;
- carrying out a selection from the path differences, without any sampling regularity constraints, according to the results of the estimation step, the realization of the selection comprising the use of an amount characterizing the performance or the improvement of the interferometric inversion, and the iterative repetition of the following steps:
a: initially, no path difference is selected;
b: calculating for each path difference the increase in the amount characterizing the performance or the improvement of the interferometric inversion, when adding said path difference to all of the previously selected path differences, this calculation involving the Jacobians of the interferogram, that is to say the partial derivatives of the signal of the interferogram relative to the amount(s) to be inverted;
c: adding the path difference, that optimizes said amount, to all of the selected path differences, and repeating step b, until reaching a maximum number of selected path differences or until said amount exceeds a predetermined threshold;
- plotting the interferogram using only the selected path differences, and
- measuring the characteristic variable of the radiation source and/or of the crossed medium according to the information contained in the interferogram plotted using only the selected path differences, without reconstructing a spectrum of the sampled radiation from the interferogram.

2. A method for measuring a characteristic variable of a radiation source and/or of a medium crossed by the radiation between the source and an interferometer, the interferometer being adapted to plot an interferogram of the radiation by creating a finite number of optical path differences between two rays having followed the same path between the source and the interferometer, the method comprising:
- an interferometric inversion carried out on the basis of the interferogram, so as to obtain a measurement of the characteristic variable,
the method being **characterized in that** it comprises the steps consisting in:
- estimating the contribution of each path difference to the interferometric inversion step, using a modeling by a radiative transfer code;
- carrying out a selection from the path differences, without any sampling regularity constraints, according to the results of the estimation step, the realization of the selection comprising the use of an amount characterizing the performance or the improvement of the interferometric inversion, and the iterative repetition of the following steps:
a: initially, no path difference is selected;
b: calculating for each path difference the increase in the amount characterizing the performance or the improvement of the interferometric inversion, when adding said path difference to all of the previously selected path differences, this calculation involving the Jacobians of the interferogram, that is to say the partial derivatives of the signal of the interferogram relative to the amount(s) to be inverted;
c: adding the path difference, that optimizes said amount, to all of the selected path differences, and repeating step b, until reaching a maximum number of selected path differences or until said amount exceeds a predetermined threshold;
- plotting the interferogram using only the selected path differences,
- completing with theoretical values, the interferogram plotted using only the selected path differences, said theoretical values being values obtained from a modeling,
- reconstructing a spectrum of the radiation from the plotted and completed interferogram, and
- measuring the characteristic variable of the radiation source and/or of the crossed medium using the radiation spectrum reconstructed from the interferogram.

3. The measuring method according to any of claims 1 or 2, wherein the interferogram is plotted by means of an interferometer comprising at least one mirror having a plurality of reflective surfaces arranged so as to create the selected path differences.

4. The measuring method according to any of claims 1 or 2, wherein the interferogram is plotted by means of an interferometer comprising at least one mirror and a stepper motor adapted to displace the mirror, and wherein the step of plotting the interferogram is carried out by controlling the motor to displace the mirror to the selected path differences.
